# FASCICULE DE BREVET EUROPEEN

(11) **EP 0 629 179 B1**
(45) Date de publication et mention de la délivrance du brevet: **22.03.2000**
(21) Numéro de dépôt: 94902854.2
(22) Date de dépôt: 22.12.1993
(51) Int. Cl.: C03C 3/087, C03C 3/095, C03C 4/08

(54) **COMPOSITIONS DE VERRE DESTINEES A LA FABRICATION DE VITRAGES**
Glaszusammensetzunge für die Herstellung von Glascheiben
GLASS COMPOSITIONS FOR MANUFACTURING GLAZING

(30) Priorité: 23.12.1992 FR 9215537
(43) Date de publication de la demande: 21.12.1994
(73) Titulaire: SAINT-GOBAIN VITRAGE, 92400 Courbevoie (FR)
(72) Inventeur: COMBES, Jean-Marie, F-75018 Paris (FR)
(74) Mandataire: Breton, Jean-Claude
(86) Numéro de dépôt international: FR9301292
(87) Numéro de publication internationale: WO9414716

(56) Documents cités:
- EP-A- 0 469 446
- WO-A-91/07356
- US-A- 3 294 556
- CHEMICAL ABSTRACTS, vol. 74, no. 12, 22 Mars 1971, Columbus, Ohio, US; abstract no. 56883k, page 203 ; & PL,A,60 322 (AKADEMIA GORNICZO HUTNICZA) 30 Juin 1970

## Description

La présente invention concerne des compositions de verre aptes à la réalisation de vitrages susceptibles notamment d'être utilisés dans le domaine architectural ou montés sur des véhicules automobiles.

Les vitrages utilisés dans ce dernier type d'application doivent satisfaire des exigences légales relatives à leur transmission lumineuse. Ainsi, un vitrage destiné à la réalisation d'un pare-brise doit présenter un facteur de transmission lumineuse globale sous illuminant A (TL_{A}) au moins égal à 75%. Les vitrages destinés à la réalisation des latéraux et de la lunette arrière doivent présenter, dans les mêmes conditions, un facteur TL_{A} au moins égal à 70%.

La surface vitrée des véhicules automobiles étant actuellement très importante, les exigences de la clientèle en matière de confort devenant de plus en plus grandes, les constructeurs de ces véhicules recherchent tous les moyens qui permettent d'atténuer la sensation de chaleur éprouvée par les passagers soumis au rayonnement solaire.

L'un des moyens est l'utilisation de vitrages dont le facteur de transmission énergétique globale (T_{E}) est le plus faible possible.

Pour maintenir une transmission lumineuse élevée dans la partie visible du spectre tout en absorbant le plus possible le reste de l'énergie solaire, il est connu d'introduire du fer dans la composition du verre. Le fer est présent dans le verre à la fois sous la forme d'oxyde ferrique (Fe₂O₃) et d'oxyde ferreux (FeO).

La présence de Fe₂O₃ permet d'absorber les radiations U.V. et celles qui possèdent de courtes longueurs d'ondes dans la partie visible du spectre ; à l'opposé, la présence de FeO permet d'absorber les radiations du proche I.R. et celles correspondant aux grandes longueurs d'ondes du domaine visible.

Si l'augmentation de la teneur en fer, sous ses deux formes oxydées, accentue l'absorption des radiations aux deux extrémités du spectre visible, cet effet est obtenu au détriment de la transmission lumineuse.

A ce jour, différentes solutions ont été proposées pour utiliser au mieux l'aptitude des oxydes de fer à absorber les radiations en conservant néanmoins la plus grande transmission lumineuse possible. Les solutions privilégiant l'absorption des radiations appartenant au domaine du proche infrarouge peuvent consister à modifier de manière importante la composition du verre ou bien à fabriquer des verres très réduits dont la composition est relativement classique.

La première catégorie de solutions peut être illustrée par la demande de brevet JP-60-215546, la seconde catégorie par le brevet EP-B-297 404.

D'après La demande japonaise les verres qui présentent les caractéristiques de transmission et d'absorption recherchées contiennent au moins 4% en poids de BaO. Cet oxyde, introduit en quantité suffisante, a pour effet de déplacer la bande d'absorption due à FeO dans le proche infrarouge vers les grandes longueurs d'onde. Cet effet peut être accentué par l'introduction de K₂O dans ces verres.

L'introduction de BaO selon des teneurs relativement élevées dans ces verres a cependant des effets qui sont négatifs : l'augmentation non négligeable du coût de la composition, la diminution de la résistance hydrolytique du verre. Un fort pourcentage de BaO peut accentuer le phénomène de dévitrification et rendre plus difficile l'obtention d'un verre homogène.

Les verres décrits dans le brevet européen cité plus haut sont des verres silico-sodo-calciques traditionnels dont la teneur en fer total, exprimée sous la forme de Fe₂O₃, est comprise entre 0,45 et 0,65%. Ces verres sont élaborés dans des conditions telles qu'au moins 35% et de préférence au moins 50% de fer total est sous la forme FeO. L'augmentation de la teneur en FeO ainsi obtenue permet d'accentuer l'absorption des verres dans l'infra-rouge et de diminuer le facteur T_{E}. Toutefois, lorsqu'un verre est élaboré en présence de soufre dans des conditions réductrices, ce dernier prend une couleur ambre due à la formation de chromophores qui résultent de la réaction entre le soufre et le fer ferrique. Pour éviter cela il est donc nécessaire de supprimer les sulfates dans le mélange vitrifiable et, comme la teneur en soufre dans un verre n'est jamais nulle, de veiller à ce que le pourcentage de fer ferrique reste faible, ce qui conduit à limiter rigoureusement la teneur en fer total.

La présente invention a pour objet une composition de verre, susceptible d'être nappée à la surface d'un bain d'étain selon la technique du verre flotté, dont le coût est proche du coût d'un verre flotté standard et qui présente des caractéristiques de transmission dans le visible et d'absorption dans le proche infra-rouge au moins égales à celles des meilleurs verres connus.

La présente invention a pour objet une composition de verre susceptible d'être élaborée dans les conditions d'oxydo-réduction habituellement observées pour un verre flotté standard.

La présente invention a également pour objet une composition de verre dont les caractéristiques telles que la viscosité ou la résistance hydrolytique demeurent peu différentes de celles d'un verre flotté standard.

Ces buts sont atteints grâce à une composition de verre silico-sodo-calcique qui comprend les constituants ci-après selon des teneurs exprimées en pourcentages pondéraux, définies par les limites suivantes :

| | |
|---|---|
| SiO₂ | 69 à 75 % |
| Al₂O₃ | 0 à 3 % |
| CaO | 2 à 10 % |
| MgO | 0 à 2 % |
| Na₂O | 9 à 17 % |
| K₂O | 0 à 8 % |
| Fe₂O₃ (fer total) | 0,2 à 1,5 % |

Ces compositions étant susceptibles de contenir également du fluor, des oxydes de zinc, de zirconium, de cérium, de titane et moins de 4% d'oxyde de baryum, la somme des pourcentages des oxydes alcalino-terreux demeurant égale ou inférieure à 10%, ladite composition de verre présentant une bonde d'absorption dans l'infrarouge dont le maximun se situe à une longueur d'onde supérieure à environ 1100 nanomètres.

La silice est maintenue dans des limites relativement étroites pour les raisons suivantes :
* au-dessus d'environ 75% la viscosité du verre et son aptitude à la dévitrification augmentent fortement ce qui rend beaucoup plus difficile sa fusion et sa coulée sur un bain d'étain,
* au-dessous de 69% la résistance hydrolytique du verre décroît très rapidement et la transmission dans le visible diminue également.

Cette diminution de la résistance hydrolytique du verre peut être compensée, au moins en partie, par l'introduction de Al₂O₃, mais cet oxyde contribue à l'augmentation de sa viscosité et à une diminution de la transmission dans le visible ; il ne peut donc être utilisé qu'en quantité très limitée.

Les oxydes alcalins Na₂O et K₂O permettent de faciliter la fusion du verre et d'ajuster sa viscosité aux températures élevées afin de la maintenir proche de celle d'un verre standard.

K₂O peut être utilisé jusqu'à environ 8%. Au-delà de ce pourcentage, l'augmentation du coût. de la composition devient un handicap économique. Par ailleurs, l'augmentation du pourcentage de K₂O ne peut se faire, pour l'essentiel, qu'au détriment de Na₂O ce qui peut contribuer à l'augmentation de la viscosité. Toutefois, dans des conditions déterminées, la présence de K₂O permet d'augmenter l'absorption du verre dans l'infrarouge.

Les oxydes alcalino-terreux jouent un rôle déterminant dans l'obtention des propriétés des verres de la présente invention.

Il a été en effet découvert que la limitation du pourcentage de MgO à 2% et, de préférence, sa suppression dans les verres de l'invention en tant qu'ajout volontaire, permettent d'augmenter leur capacité d'absorption dans l'infrarouge. La suppression de MgO, qui joue un rôle important sur la viscosité peut être compensée au moins en partie par l'augmentation de Na₂O.

CaO doit être limité à 10% ; au-delà, l'aptitude du verre à la dévitrification augmente trop rapidement. BaO peut être ajouté dans les compositions selon l'invention dans des teneurs inférieures à 4%.

En effet, BaO a une influence beaucoup plus faible que MgO et CaO sur la viscosité du verre. Dans le cadre de l'invention l'augmentation de BaO se fait essentiellement au détriment des oxydes alcalins, de MgO et surtout de CaO. Toute augmentation importante de BaO contribue donc à augmenter la viscosité du verre, notamment aux basses températures. De surcroît l'introduction d'un pourcentage élevé de BaO majore sensiblement le coût de la composition et a tendance à réduire la résistance hydrolytique du verre.

A ces considérations il faut ajouter que, contrairement à ce qu'indique le document japonais analysé précédemment, l'introduction d'un faible pourcentage de BaO dans un verre contenant peu et, de préférence, pas de MgO, permet d'augmenter encore l'absorption des radiations infrarouges.

Outre le respect des limites définies précédemment pour la variation de la teneur de chaque oxyde alcalino-terreux, il est impératif, pour obtenir les propriétés de transmission recherchées, de limiter la somme des pourcentages de MgO, CaO et BaO à une valeur égale ou inférieure à 10%.

Les verres selon l'invention contiennent également des oxydes de fer dont les teneurs sont globalement exprimées sous la forme Fe₂O₃ (fer total).

Les verres selon l'invention peuvent également contenir jusqu'à 1% d'autres constituants apportés par les impuretés des matières premières vitrifiables et/ou du fait de l'introduction de calcin dans le mélange vitrifiable et/ou provenant de l'utilisation d'agents d'affinage (SO₃, Cl, Sb₂O₃, As₂O₃).

Une première série de compositions de verre préférées selon l'invention comprend les constituants ci-après dans les limites pondérales suivantes :

| | |
|---|---|
| SiO₂ | 71 à 75 % |
| Al₂O₃ | 0 à 3 % |
| CaO | 6 à 10 % |
| Na₂O | 12 à 17 % |
| Fe₂O₃ (fer total) | 0,2 à 1,5 % |

Ces verres sont, de préférence, dénués de MgO ; ils sont éventuellement dénués de K₂O. Par le terme dénués, il faut comprendre que ces verres peuvent éventuellement contenir une très faible quantité des oxydes concernés apportés par les impuretés d'une matière première vitrifiable ou du fait de l'introduction de calcin dans le mélange vitrifiable.

Une autre série de compositions de verre préférées selon l'invention comprend les constituants ci-après dans les limites pondérales suivantes :

| | |
|---|---|
| SiO₂ | 69 à 74 % |
| Al₂O₃ | 0 à 3 % |
| CaO | 2 à 7 % |
| Na₂O | 10 à 15 % |
| K₂O | 2 à 7 % |
| Fe₂O₃ | 0,2 à 1,5 % |

ces verres sont, de préférence, dénués de MgO.

Lorsque les verres de l'invention contiennent de l'oxyde de baryum, le pourcentage de cet oxyde est, de préférence, compris entre 0,5 et 3,5% en poids.

Les verres selon l'invention peuvent contenir également du fluor, de préférence entre 0,5 et 2% en poids. Outre son action bien connue sur la fusion et la viscosité du verre, ce constituant a un effet spécifique sur l'absorption des radiations infrarouges, effet qui s'additionne à l'effet produit par la suppression de MgO et l'introduction de K₂O et BaO. Cet effet se traduit par un léger déplacement du maximum de la bande d'absorption dans l'infrarouge, mais surtout par un redressement de pente de ladite bande à l'extrêmité du domaine du visible proche de l'infrarouge.

Les verres selon l'invention peuvent aussi contenir de l'oxyde de zinc. Cet oxyde permet de diminuer la viscosité du verre si nécessaire et contribue à augmenter la résistance hydrolytique du verre et à diminuer son aptitude à la dévitrification. C'est la raison pour laquelle ZnO est introduit de préférence dans les verres selon l'invention contenant un pourcentage élevé de silice et/ou ne contenant pas d'alumine. L'oxyde de zinc peut être aussi avantageusement ajouté dans le mélange vitrifiable qui sera utilisé pour élaborer un verre réduit. Cet oxyde permet d'éviter l'apparition d'une couleur ambre qui se produit fréquemment dans ce type de verres. Afin de ne pas majorer excessivement le coût de la composition ZnO est introduit dans des proportions comprises entre 0,5 et 3% en poids.

Les verres selon l'invention peuvent également contenir de l'oxyde de zirconium. Cet oxyde permet de stabiliser le verre et d'améliorer la résistance chimique du verre, en particulier sa résistance hydrolytique. Cet oxyde est introduit, de préférence, dans les verres selon l'invention contenant peu ou pas d'alumine dans des teneurs qui peuvent atteindre 1,5% en poids.

Les verres selon l'invention peuvent également contenir de l'oxyde de cérium afin d'augmenter l'absorption des radiations ultra-violettes. Les verres selon l'invention peuvent comprendre jusqu'à 1,5% et, de préférence, de 0,3 à 0,8% en poids de Ce₂O₃.

Les verres selon l'invention peuvent aussi contenir de l'oxyde de titane, la teneur de cet oxyde pouvant atteindre 1% en poids. Cet oxyde, comme Ce₂O₃, permet d'augmenter L'absorption des radiations ultraviolettes. Lorsque ces deux oxydes sont présents dans les verres selon l'invention, l'introduction de TiO₂ permet de réduire la teneur en Ce₂O₃ qui est un oxyde cher. Généralement, la somme de ces deux oxydes n'excède pas 1,2% en poids.

Les verres selon l'invention peuvent être élaborés dans des conditions qui permettent d'atteindre le degré d'oxydo-réduction désiré. Ainsi les verres selon l'invention peuvent être élaborés en utilisant les agents d'affinage connus, tels que les sulfates, leur rédox étant inférieur à 0,35 et généralement compris entre 0,2 et 0,3. Les verres selon l'invention les moins riches en fer peuvent être aussi élaborés dans des conditions décrites, par exemple, par le brevet EP-B-297 404 et présenter un rédox supérieur à 0,4 ou 0,5 ; le rédox des verres selon l'invention reste toutefois inférieur à 0,8.

L'effet cumulé des différents constituants des verres selon l'invention se traduit notamment par un déplacement vers les grandes longueurs d'onde du maximum de la bande d'absorption due à FeO dans le proche infrarouge. Ce maximum se situe, pour les verres selon l'invention, au-dessus d'environ 1100 nanomètres.

Ce déplacement, qui s accompagne le plus souvent d'une augmentation de l'intensité de la bande d'absorption, est obtenu est obtenu en conservant une transmission lumineuse globale particulièrement élevée. Il en résulte que les facteurs de transmission lumineuse et énergétique globales des verres selon l'invention sont tels que le rapport TL_{A}/T_{E} est généralement égal ou supérieur à 1,65 et même, pour la majorité d'entre eux, égal ou supérieur à 1,70.

Les verres selon l'invention, présentent, sous une épaisseur de 3,85 millimètres, un facteur TL_{A} au moins égal à 71%.

Les verres selon l'invention, présentent, sous une épaisseur de 3,85 millimètres, une transmission dans l'infrarouge généralement inférieure à 30%.

Les facteurs de transmission lumineuse globale sous illuminant A (TL_{A}) et de transmission énergétique globale (T_{E}), de même que la transmission dans l'infrarouge (T_{IR}), ont été mesurés selon la méthode PARRY MOON MASS 2 ; la transmission dans l'ultraviolet a été déterminée selon la méthode définie par la norme ISO 9050.

Les avantages des verres selon l'invention seront mieux perçus à travers une série d'exemples qui sont commentés ci-après.

Plusieurs séries de verres ont été élaborés à partir des compositions théoriques figurant dans le tableau en annexe. Tous ces verres ont été élaborés dans des conditions d'oxydo-réduction sensiblement identiques ; leur rédox est compris entre environ 0,28 et environ 0,30.

Ce tableau indique également les valeurs des propriétés suivantes :
* le facteur de transmission énergétique globale T_{E} (71) est évalué par calcul pour un facteur de transmission lumineuse globale TL_{A} identique et égal à 71%,
* les valeurs de transmission dans l'ultraviolet (T_{UV}) et dans l'infrarouge (T_{IR}) sont mesurées sous une épaisseur de 3,85 millimètres,
* λ (FeO) correspond à la longueur d'onde du maximum de la bande d'absorption dans l'infrarouge due à FeO,
* la résistance hydrolytique des verres est appréciée par la méthode D.G.G. Cette méthode consiste à plonger 10 grammes de verre broyé, dont la taille des grains est comprise entre 360 et 400 micromètres, dans 100 millilitres d'eau portés à ébullition pendant 5 heures. Après refroidissement rapide, on filtre la solution et on évapore à sec un volume déterminé du filtrat. Le poids de la matière sèche obtenue permet de calculer la quantité de verre dissoute dans l'eau; cette quantité est exprimée en milligrammes par gramme de verre resté.

Les verres Ex. n° 1, 5 et 9 servent de références.

Le premier est un verre standard contenant de la magnésie. Son facteur de transmission énergétique globale correspondant à un facteur de transmission globale de 71% est relativement élevé et conduit à un rapport TL_{A}:T_{E} de 1,53.

Comparativement à ce premier exemple, les verres Ex. n° 2, 3 et 4 dénués de MgO illustrent une partie des verres selon l'invention. Ces verres, ne contenant ni potassium, ni baryum et élaborés dans les mêmes conditions d'oxyda-réduction que le verre Ex. n° 1, possèdent par rapport à ce dernier un facteur T_{E} beaucoup plus faible pour un même facteur TL_{A}. Ceci est dû à une augmentation de l'intensité de la bande d'absorption dans l'infra-rouge due à FeO et à un déplacement considérable du maximum de cette bande vers les grandes longueurs d'onde ; le déplacement observé est supérieur à 100 nanomètres.

Les verres Ex. n° 6 à 8, illustrent les verres selon l'invention contenant du potassium et dénués à la fois de MgO et de BaO. Ces verres peuvent être comparés au verre Ex. n° 5 qui dérive du verre Ex. n° 1 en substituant 5% de K₂O à une partie de la teneur en Na₂O. Cette substitution a permis une diminution du facteur T_{E} corrélative du déplacement du maximum de la bande d'absorption dans l'infrarouge provoquée par l'introduction de K₂O.

Dans les verres selon l'invention l'effet cumulé de l'absence de MgO et de la présence du même pourcentage de K₂O permet un déplacement substantiel du maximum de la bande. Ceci se traduit par une diminution remarquable du facteur T_{E}. L'influence attribuable au potassium seul dans ce phénomène peut être estimée en comparant les verres Ex. n° 3 et 8.

Les verres Ex. n° 10 à 15 illustrent les verres selon l'invention qui contiennent simultanément K₂O et BaO. Ces verres sont dénués de MgO.

La présence de BaO peut encore permettre une diminution du facteur T_{E} liée au déplacement du maximum de la bande d'absorption et à l'augmentation de l'intensité de ladite bande.

La comparaison des verres Ex. n° 13 et 14 au verre Ex. n° 7 illustre ce phénomène.

Les verres Ex. n° 10 à 14 peuvent être également comparés au verre Ex. n° 9 qui est hors de l'invention. Ce dernier se distingue des précédents par une teneur en BaO nettement plus élevée. Outre le fait qu'une telle teneur n'apporte aucun abaissement supplémentaire du facteur T_{E} on peut constater que ce verre présente une transmission plus élevée dans l'infrarouge et une diminution importante de sa résistance hydrolytique.

Les verres Ex. 16 à 19 illustrent les verres selon l'invention qui contiennent TiO₂ et/ou Ce₂O₃. Ces verres sont dénués de MgO, BaO et K₂O ; ils se distinguent, pour une transmission lumineuse globale de 71%, par une absorption particulièrement remarquable à la fois dans l'infrarouge et dans l'ultraviolet.

Le verre Ex. n° 20 illustre l'influence du fluor dans un verre contenant K₂O et dénué de MgO et de BaO. Il se caractérise notamment par une absorption dans l'infrarouge exceptionnellement forte.

D'une manière générale les verres selon l'invention présentent une résistance hydrolytique qui, mesurée par la méthode D.G.G., se traduit par un résidu inférieur à 75 milligrammes et pour la plus grande majorité, inférieur à 60 milligrammes. Cette résistance est du même ordre de grandeur que celle des verres float traditionnels, qui présentent une D.G.G. d'environ 30 à 40 milligrammes.

Les verres selon l'invention présentent également une courbe de viscosité très voisine de celle d'un verre float standard.

En effet les températures correspondant à log η = 4 et log η = 2 sont de l'ordre de 1020°C et 1440°C respectivement pour un verre float standard ; pour la majorité des verres de l'invention, ces mêmes températures oscillent respectivement entre 980 et 1050°C et entre 1400 et 1475°C.

Les verres selon l'invention sont compatibles avec les techniques habituelles de fabrication du verre plat sous réserve, pour certains verres, d'être élaborés dans des fours équipés d'électrodes. L'épaisseur du ruban de verre obtenu par nappage du verre en fusion sur un bain d'étain peut varier entre 0,8 et 10 millimètres.

Le vitrage obtenu par la découpe du ruban de verre peut subir ultérieurement une opération de bombage, notamment lorsqu'il doit être monté sur un véhicule automobile.

Pour réaliser des pare-brise ou des vitrages latéraux, le vitrage choisi est initialement découpé dans un ruban de verre dont l'épaisseur varie généralement entre 3 et 5 millimètres. Sous ces épaisseurs les verres selon l'invention assurent un bon confort thermique.

A l'instar d'autres vitrages, les vitrages obtenus à partir des verres selon l'invention peuvent être soumis au préalable à des traitements superficiels ou être associés, par exemple, à un revêtement organique tel qu'un film à base de polyuréthanes à propriétés antilacérantes ou à un film assurant l'étanchéité en cas de bris ; il peut être revêtu localement d'une couche telle qu'une couche d'émail.

Les vitrages selon l'invention peuvent être revêtus d'au moins une couche d'oxyde métallique obtenue par dépôt chimique à haute température selon les techniques de pyrolyse ou de dépôt chimique en phase vapeur (CVD) ou par dépôt sous vide.

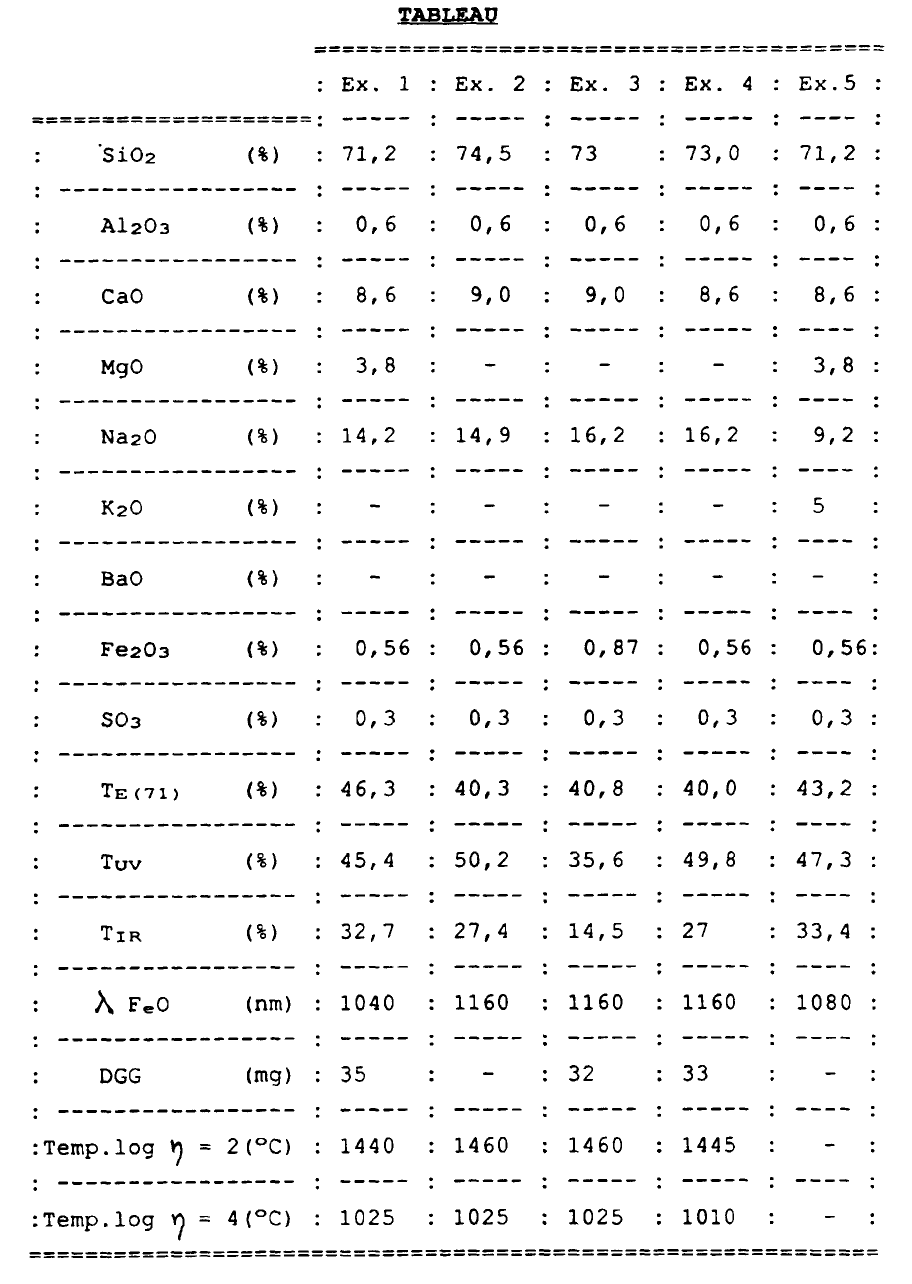

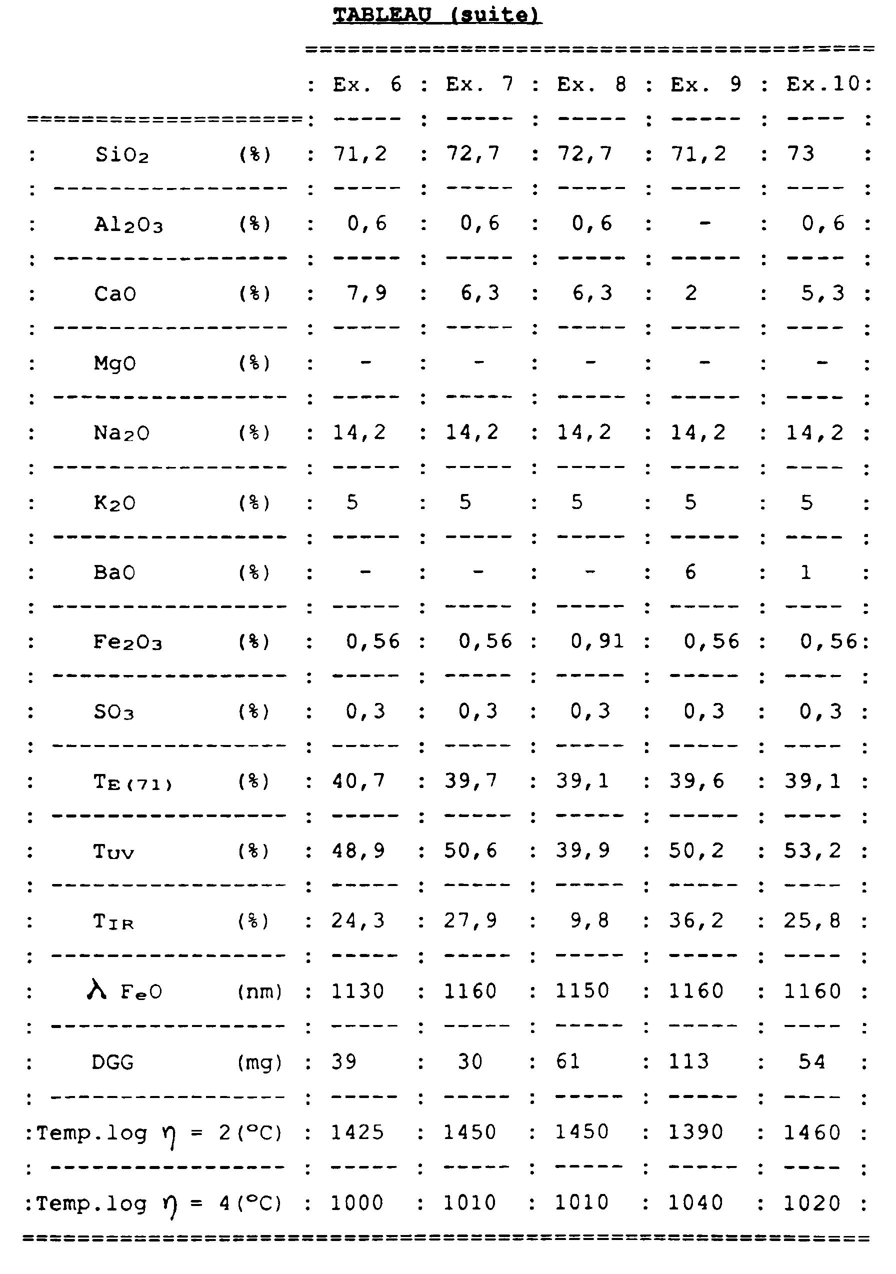

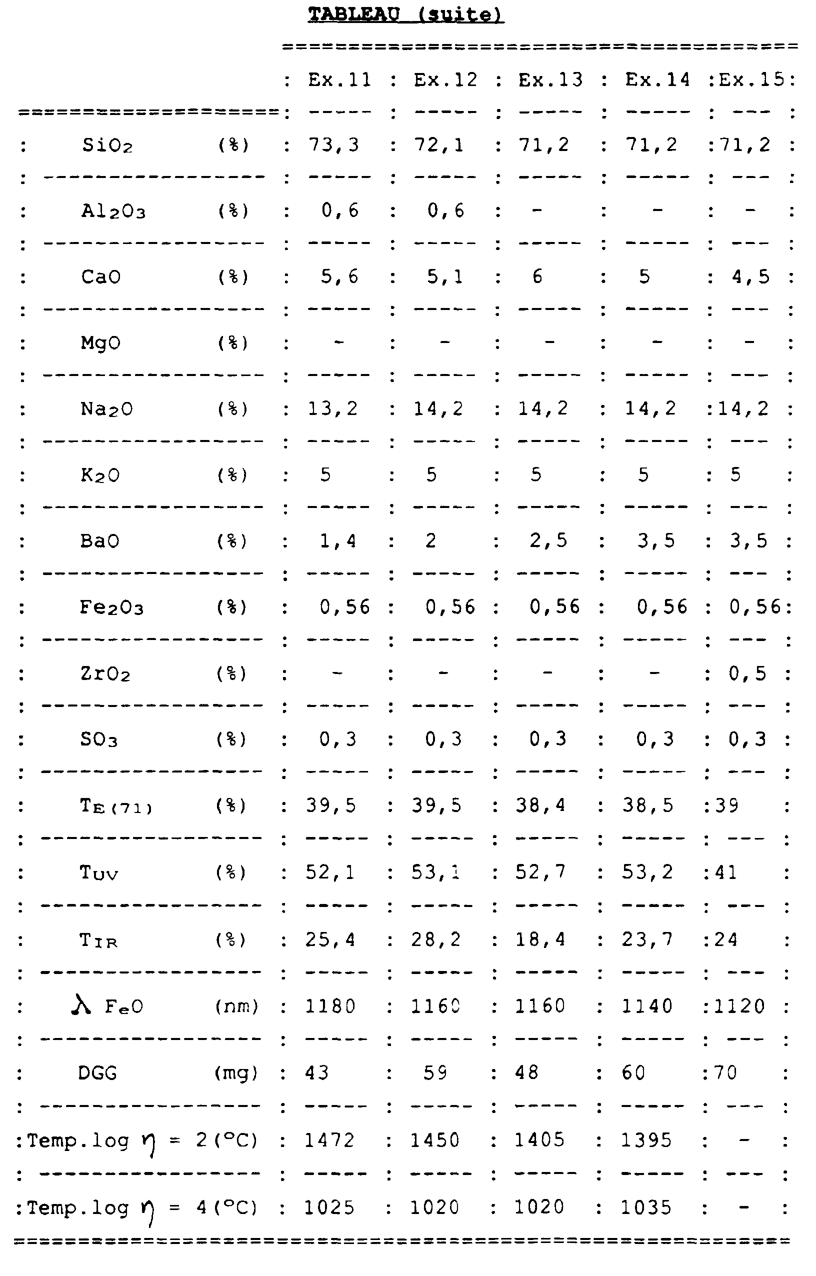

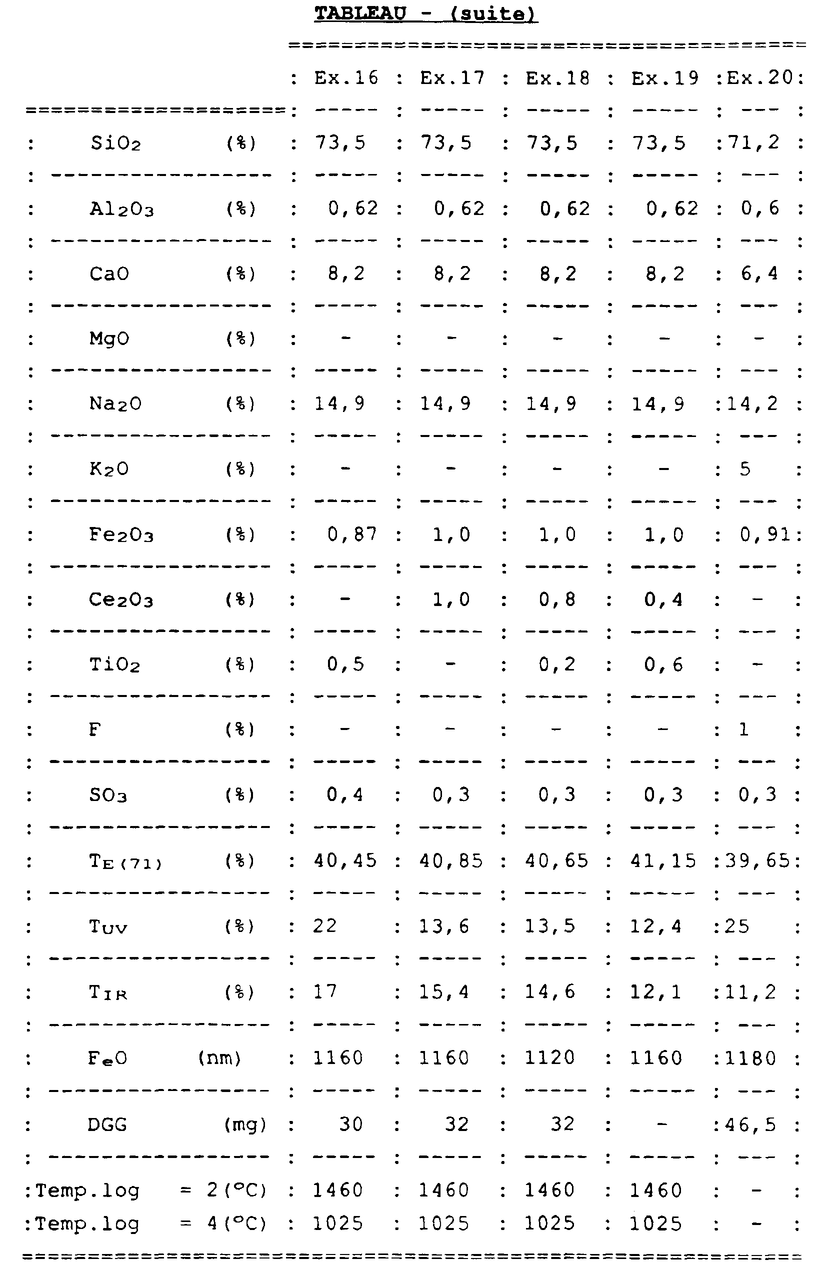

## Revendications

1. Composition de verre silico-sodo-calcique destinée notamment à la réalisation de vitrage, ***caractérisée en ce qu*****'**elle comprend les constituants ci-après selon des teneurs, exprimées en pourcentages pondéraux, définies par les limites suivantes :
| | |
|---|---|
| SiO₂ | 69 à 75 % |
| Al₂O₃ | 0 à 3 % |
| CaO | 2 à 10 % |
| MgO | 0 à 2 % |
| Na₂O | 9 à 17 % |
| K₂O | 0 à 8 % |
| Fe₂O₃ | 0,2 à 1,5 % |
ces compositions étant susceptibles de contenir également du fluor, des oxydes de zinc, de zirconium, de cérium, de titane et moins de 4% d'oxyde de baryum, la somme des pourcentages des oxydes alcalino-terreux demeurant égale ou inférieure à 10%, ladite composition de verre présentant une bande d'absorption dans l'infrarouge dont le maximum se situe à une longueur d'onde supérieure à environ 1100 nanomètres.

2. Composition selon la revendication 1, ***caractérisée en ce qu*****'**elle comprend :
| | |
|---|---|
| SiO₂ | 71 à 75 % |
| Al₂O₃ | 0 à 3 % |
| CaO | 6 à 10 % |
| Na₂O | 12 à 17 % |
| Fe₂O₃ | 0,2 à 1,5 % |

3. Composition selon la revendication 2, ***caractérisée en ce qu*****'**elle est dénuée de MgO.

4. Composition selon l'une des revendications 2 et 3, ***caractérisée en ce qu*****'**elle est dénuée de K₂O.

5. Composition selon la revendication 1, ***caractérisée en ce qu*****'**elle comprend :
| | |
|---|---|
| SiO₂ | 69 à 74 % |
| Al₂O₃ | 0 à 3 % |
| CaO | 2 à 7 % |
| Na₂O | 10 à 15 % |
| K₂O | 2 à 7 % |
| Fe₂O₃ | 0,2 à 1,5 % |

6. Composition selon la revendication 5, ***caractérisée en ce qu*****'**elle est dénuée de MgO.

7. Composition selon l'une quelconque des revendications précédentes, ***caractérisée en ce qu*****'**elle comprend de 0,5 à 3,5% en poids de BaO.

8. Composition selon l'une quelconque des revendications précédentes, ***caractérisée en ce qu*****'**elle comprend de 0,5 à 2% en poids de fluor.

9. Composition selon l'une quelconque des revendications précédentes, ***caractérisée en ce qu*****'**elle comprend de 0,5 à 3% en poids de ZnO.

10. Composition selon l'une quelconque des revendications précédentes, ***caractérisée en ce qu*****'**elle comprend jusqu'à 1,5% en poids de ZrO₂.

11. Composition selon l'une quelconque des revendications précédentes*, **caractérisée en ce qu*****'**elle comprend jusqu'à 1,5% et de préférence, de 0,3 à 0,8% en poids de Ce₂O₃.

12. Composition selon l'une quelconque des revendications précédentes, ***caractérisée en ce qu*****'**elle comprend jusqu'à 1 % en poids de TiO₂.

13. Composition selon l'une des revendications 11 et 12, **caractérisée *en ce qu*'**elle comprend simultanément des oxydes de cérium et de titane dans des proportions telles que la somme Ce₂O₃ + TiO₂ demeure égale ou inférieure à 1,2% en poids.

14. Composition selon l'une quelconque des revendications précédentes, ***caractérisée en ce qu*****'**elle comprend des oxydes de fer dans des proportions telles que le rapport FeO/Fe₂O₃ demeure inférieur à 0,8.

15. Vitrage, ***caractérisé en ce qu***'il comprend au moins une feuille de verre dont la composition chimique est définie par l'une quelconque des revendications précédentes, ladite feuille présentant une épaisseur comprise entre 0,8 et 10 millimètres.

16. Vitrage selon la revendication 15, ***caractérisé en ce qu*****'**il comprend au moins une feuille de verre, ledit verre présentant, sous une épaisseur de 3,85 millimètres, un facteur T_{LA} au moins égal à 71 %.

17. Vitrage selon la revendication 16*, **caractérisé en ce qu*****'**il comprend au moins une feuille de verre, ledit verre présentant, sous une épaisseur de 3,85 millimètres, un facteur T_{LA} et un facteur T_{E} tels que le rapport T_{LA}/T_{E} est égal ou supérieur à 1,65.

18. Vitrage selon l'une quelconque des revendications 15 à 17, ***caractérisé en ce qu***'il comprend au moins une feuille de verre, ledit verre présentant, sous une épaisseur de 3,85 millimètres, une transmission dans l'infrarouge inférieure à 30%.

19. Vitrage selon l'une quelconque des revendications 15 à 18, ***caractérisé en ce qu*****'**il comprend au moins une feuille de verre, ledit verre présentant une résistance hydrolytique, mesurée selon la méthode D.G.G. telle que le résidu après attaque est inférieur à environ 75 milligrammes.

## Claims

1. Soda-lime-silica glass composition intended notably for producing glazing panes, characterised in that it comprises the following constituents in accordance with the contents, expressed as percentages by weight, defined by the following limits:
| | |
|---|---|
| SiO₂ | 69 to 75% |
| Al₂O₃ | 0 to 3% |
| CaO | 2 to 10% |
| MgO | 0 to 2% |
| Na₂O | 9 to 17% |
| K₂O | 0 to 8% |
| Fe₂O₃ | 0.2 to 1.5% |
these compositions also being able to contain fluorine and oxides of zinc, zirconium, cerium and titanium and less than 4% barium oxide, the sum of the percentages of the alkaline earth oxides remaining equal to or less than 10%, the said first composition having an absorption band in the infrared region whose maximum value is situated at a wavelength greater than approximately 1100 nanometers.

2. Composition according to Claim 1, characterised in that it coomprises:
| | |
|---|---|
| SiO₂ | 71 to 75% |
| Al₂O₃ | 0 to 3% |
| CaO | 6 to 10% |
| Na₂O | 12 to 17% |
| Fe₂O₃ | 0.2 to 1.5% |

3. Composition according to Claim 2, characterised in that it is devoid of MgO.

4. Composition according to one of Claims 2 or 3, characterised in that it is devoid of K₂O.

5. Composition according to Claim 1, characterised in that it comprises:
| | |
|---|---|
| SiO₂ | 69 to 74% |
| Al₂O₃ | 0 to 3% |
| CaO | 2 to 7% |
| Na₂O | 10 to 15% |
| K₂O | 2 to 7% |
| Fe₂O₃ | 0.2 to 1.5% |

6. Composition according to Claim 5, characterised in that it is devoid of MgO.

7. Composition according to any one of the preceding claims, characterised in that it comprises 0.5 to 3.5% by weight BaO.

8. Composition according to any one of the preceding claims, characterised in that it comprises 0.5 to 2% by weight fluorine.

9. Composition according to any one of the preceding claims, characterised in that it comprises 0.5 to 3% by weight ZnO.

10. Composition according to any one of the preceding claims, characterised in that it comprises up to 1.5% by weight ZrO₂.

11. Composition according to any one of the preceding claims, characterised in that it comprises up to 1.5% and preferably 0.3 to 0.8% by weight Ce₂O₃.

12. Composition according to any one of the preceding claims, characterised in that it comprises up to 1% by weight TiO₂.

13. Composition according to one of Claims 11 and 12, characterised in that it comprises at the same time oxides of cerium and of titanium in proportions such that the sum Ce₂O₃ + TᵢO₂ remains equal to or less than 1.2% by weight.

14. Composition according to any one of the preceding claims, characterised in that it comprises oxides of iron in proportions such that the ratio FeO/Fe₂O₃ remains less than 0.8.

15. Glazing pane, characterised in that it comprises at least one sheet of glass whose chemical composition is defined by any one of the preceding claims, the said sheet having a thickness of between 0.8 and 10 millimetres.

16. Glazing pane according to Claim 15, characterised in that it comprises at least one sheet of glass, the said glass having, at a thickness of 3.85 millimetres, a TL_{A} factor of at least 71%.

17. Glazing pane according to Claim 16, characterised in that it comprises at least one sheet of glass, the said glass having, at a thickness of 3.85 millimetres, a TL_{A} factor and a T_{E} factor such that the ratio TL_{A}/T_{E} is equal to or greater than 1.65.

18. Glazing pane according to any one of Claims 15 to 17, characterised in that it comprises at least one sheet of glass, said glass having, at a thickness of 3.85 millimetres, transmission in the infrared region of less than 30%.

19. Glazing pane according to any one of Claims 15 to 18, characterised in that it comprises at least one sheet of glass, the said glass having a hydrolytic resistance, measured according to the DGG method, such that the residue after attack is less than approximately 75 milligrams.

## Patentansprüche

1. Kalk-Natron-Silicat-Glaszusammensetzung, die insbesondere zur Herstellung einer Verglasung vorgesehen ist**, dadurch gekennzeichnet, daß** sie folgende Bestandteile mit in Gewichtsprozenten ausgedrückten Gehalten innerhalb nachstehender Grenzen umfaßt:
| | |
|---|---|
| SiO₂ | 69 bis 75 %, |
| Al₂O₃ | 0 bis 3 %, |
| CaO | 2 bis 10 %, |
| MgO | 0 bis 2 %, |
| Na₂O | 9 bis 17 %, |
| K₂O | 0 bis 8 %, |
| Fe₂O₃ | 0,2 bis 1,5 %, |
wobei diese Zusammensetzungen in der Lage sind, auch Fluor, die Oxide des Zinks, Zirconiums, Cers und Titans und weniger als 4 % Bariumoxid zu enthalten, die Summe der Prozentanteile der Erdalkalioxide gleich oder kleiner als 10 % bleibt und die Glaszusammensetzung eine Absorptionsbande im Infrarot aufweist, deren Maximum sich bei einer Wellenlänge von größer als etwa 1100 Nanometern befindet.

2. Zusammensetzung nach Anspruch 1**, dadurch gekennzeichnet, daß** sie enthält:
| | |
|---|---|
| SiO₂ | 71 bis 75 %, |
| Al₂O₃ | 0 bis 3 %, |
| CaO | 6 bis 10 %, |
| Na₂O | 12 bis 17 %, |
| Fe₂O₃ | 0,2 bis 1,5 %. |

3. Zusammensetzung nach Anspruch 2**, dadurch gekennzeichnet, daß** sie frei von MgO ist.

4. Zusammensetzung nach Anspruch 2 oder 3**, dadurch gekennzeichnet, daß** sie frei von K₂O ist.

5. Zusammensetzung nach Anspruch 1**, dadurch gekennzeichnet, daß** sie enthält:
| | |
|---|---|
| SiO₂ | 69 bis 74 %, |
| Al₂O₃ | 0 bis 3 %, |
| CaO | 2 bis 7 %, |
| Na₂O | 10 bis 15 %, |
| K₂O | 2 bis 7 %, |
| Fe₂O₃ | 0,2 bis 1,5 %. |

6. Zusammensetzung nach Anspruch 5**, dadurch gekennzeichnet, daß** sie frei von MgO ist.

7. Zusammensetzung nach einem der vorhergehenden Ansprüche**, dadurch gekennzeichnet, daß** sie 0,5 bis 3,5 Gew.-% BaO enthält.

8. Zusammensetzung nach einem der vorhergehenden Ansprüche**, dadurch gekennzeichnet, daß** sie 0,5 bis 2 Gew.-% Fluor enthält.

9. Zusammensetzung nach einem der vorhergehenden Ansprüche**, dadurch gekennzeichnet, daß** sie 0,5 bis 3 Gew.-% ZnO enthält.

10. Zusammensetzung nach einem der vorhergehenden Ansprüche**, dadurch gekennzeichnet, daß** sie bis zu 1,5 Gew.-% ZrO₂ enthält.

11. Zusammensetzung nach einem der vorhergehenden Ansprüche**, dadurch gekennzeichnet, daß** sie bis zu 1,5 Gew.-% und vorzugsweise 0,3 bis 0,8 Gew.-% Ce₂O₃ enthält.

12. Zusammensetzung nach einem der vorhergehenden Ansprüche**, dadurch gekennzeichnet, daß** sie bis zu 1 Gew.- % TiO₂ enthält.

13. Zusammensetzung nach Anspruch 11 oder 12**, dadurch gekennzeichnet, daß** sie gleichzeitig Ceroxid und Titandioxid in solchen Anteilen enthält, daß die Summe von Ce₂O₃ + TiO₂ gleich oder kleiner als 1,2 Gew.-% bleibt.

14. Zusammensetzung nach einem der vorhergehenden Ansprüche**, dadurch gekennzeichnet, daß** sie Eisenoxide in solchen Anteilen enthält, daß das Verhältnis von FeO/Fe₂O₃ kleiner als 0,8 bleibt.

15. Verglasung**, dadurch gekennzeichnet, daß** sie mindestens eine Glasscheibe enthält, deren chemische Zusammensetzung durch einen der vorhergehenden Ansprüche definiert ist, wobei die Glasscheibe eine Dicke von 0,8 bis 10 Millimetern aufweist.

16. Verglasung nach Anspruch 15**, dadurch gekennzeichnet, daß** sie mindestens eine Glasscheibe enthält, wobei dieses Glas bei einer Dicke von 3,85 Millimetern einen Lichttransmissionsgrad T_{LA} von wenigstens 71 % aufweist.

17. Verglasung nach Anspruch 16**, dadurch gekennzeichnet, daß** sie mindestens eine Glasscheibe enthält, wobei dieses Glas bei einer Dicke von 3,85 Millimetern einen solchen Lichttransmissionsgrad T_{LA} und einen solchen Strahlungstransmissionsgrad T_{E} aufweist, daß das Verhältnis von T_{LA}/T_{E} gleich oder größer als 1,65 ist.

18. Verglasung nach einem der Ansprüche 15 bis 17**, dadurch gekennzeichnet, daß** sie mindestens eine Glasscheibe enthält, wobei dieses Glas bei einer Dicke von 3,85 Millimetern einen Transmissionsgrad im Infrarot von unter 30 % aufweist.

19. Verglasung nach einem der Ansprüche 15 bis 18**, dadurch gekennzeichnet, daß** sie mindestens eine Glasscheibe enthält, wobei dieses Glas eine derartige, gemäß der DGG-Methode gemessene Hydrolysebeständigkeit aufweist, daß der Rückstand nach dem Angriff weniger als etwa 75 Milligramm beträgt.
